# EUROPÄISCHE PATENTSCHRIFT

(11) **EP 2 623 246 B1**
(45) Veröffentlichungstag und Bekanntmachung des Hinweises auf die Patenterteilung: **18.04.2018**
(21) Anmeldenummer: 13152977.8
(22) Anmeldetag: 29.01.2013
(51) Int. Cl.: B23H 9/02, B23H 3/04, B23H 7/26, B23H 9/14

(54) **Elektrode und Anlage zum elektrochemischen Bearbeiten sowie Verfahren hierzu**
Electrode and device for electrochemically processing and method therefore
Électrode et installation destinés au traitement électrochimique ainsi que le procédé à cet effet

(30) Priorität: 31.01.2012 DE 102012201305
(43) Veröffentlichungstag der Anmeldung: 07.08.2013
(60) Teilanmeldung: 18156465.9
(73) Patentinhaber: MTU Aero Engines AG, 80995 München (DE)
(72) Erfinder: Platz, Albin, 86510 Ried-Baindlkirch (DE)

(56) Entgegenhaltungen:
- CS-B1- 217 481
- DE-A1- 1 615 127
- DE-A1- 1 816 216
- DE-A1- 2 417 474
- DE-A1- 19 929 023
- DE-B3-102004 040 578
- GB-A- 1 164 536
- US-A- 5 820 744

## Beschreibung

### HINTERGRUND DER ERFINDUNG

### GEBIET DER ERFIDNUNG

Die vorliegende Erfindung betrifft eine Elektrodenanordnung sowie eine Anlage zum definierten Verrunden oder Entgraten von Kanten von elektrisch leitfähigen Bauteilen, insbesondere Turbinenbauteilen, sowie ein entsprechendes Verfahren.

### STAND DER TECHNIK

Das elektrochemische Abtragen (Electro-Chemical Machining ECM) ist zum Bearbeiten von elektrisch leitfähigen Bauteilen bekannt. Aus der US 4,468,304 und der US 3,714,017 ist auch das elektrochemische Bearbeiten von Turbinenteilen bekannt, wobei Turbinenteile hier nicht nur als Teile einer Turbine im engeren Sinne sondern als Bauteile einer Gasturbine oder eines Flugtriebwerks zu verstehen sind, die beispielsweise auch Verdichterbauteile mit einschließen. Aus der GB 703 838 und der US 3,384,563 sind zudem Elektrodenanordnungen und Verfahren zum elektrochemischen Abrunden vom Kanten bekannt.

Die Druckschrift DE 1615127 A1 kann als nächstliegender Stand der Technik angesehen werden und beschreibt eine Elektrode zum elektrochemischen Bearbeiten von Bohrlochrändern, bei welcher seitliche radiale Austrittsöffnungen für den Elektrolyten in einer rohrförmigen Elektrode sowie ein Kragen aus einem isolierenden Werkstoff vorgesehen sind.
Gleichwohl sind weitere Verbesserungen dieser Verfahren hinsichtlich einer Verbesserung der Genauigkeit der einzustellenden Kantenradien und der Verbesserung der Effektivität erwünscht.

### OFFENBARUNG DER ERFINDUNG

### AUFGABE DER ERFINDUNG

Es ist deshalb Aufgabe der Erfindung eine Weiterentwicklung der elektrochemischen Bearbeitung von Kanten von Bauteilen, insbesondere von Turbinenbauteilen bereitzustellen, die es ermöglicht einen definierten, exakten Kantenradius zu erzeugen, wobei die Herstellung eines entsprechenden Kantenradius wirtschaftlich und effektiv durchgeführt werden soll.

### TECHNISCHE LÖSUNG

Diese Aufgabe wird gelöst mit einer Elektrodenanordnung mit den Merkmalen des Anspruchs 1, einer Anlage mit den Merkmalen des Anspruchs 8 sowie einem Verfahren mit den Merkmalen des Anspruchs 12. Vorteilhafte Ausgestaltungen sind Gegenstand der abhängigen Ansprüche.
Gemäß der Erfindung wird eine Elektrodenanordnung zum definierten Verrunden oder Bearbeiten, insbesondere Entgraten von Kanten von elektrisch leitfähigen Bauteilen bereitgestellt, bei welcher eine rohrförmige Arbeitselektrode vorgesehen ist, durch welche ein Elektrolyt zur Durchführung des elektrochemischen Abtrags geleitet wird. Der Elektrolyt kann beispielsweise eine wässrige Lösung aus NaNO₃ oder NaCl mit einer Konzentration zwischen 5 und 25 Gew.-% sein.
Bei der erfindungsgemäßen Arbeitselektrode ist am stirnseitigen Ende eines rohrförmigen Elektrodenträgers der Arbeitselektrode ein Verschluss vorgesehen, sodass die Elektrolytzuflussleitung in axialer Richtung des Elektrodenträgers verschlossen ist. Gleichzeitig ist jedoch in radialer Richtung mindestens eine Austrittsöffnung angeordnet, die entsprechend einem direkten Elektrolytzufluss zu einem seitlich angeordneten Bauteil ermöglicht. Damit ist eine exakte Bearbeitung einer Bauteilkante möglich.
Darüber hinaus kann an der Arbeitselektrode bzw. am rohrförmigen Elektrodentrager in Verlängerung der Austrittsöffnung eine Formelektrode mit der negative Form der zu erzeugenden Kantenform angeordnet sein, sodass durch die elektrische Potenzialverteilung, die durch die Formelektrode der Arbeitselektrode bewirkt wird, der Abtrag an dem zu bearbeitenden Bauteil in der gewünschten Weise erfolgt. In Kombination mit der Austrittsöffnung für den Elektrolyt wird sicher gestellt, dass ausreichend frische Elektrolytflüssigkeit im Bereich der Formelektrode vorliegt.
Dies kann noch dadurch verstärkt werden, dass an dem Verschluss seitlich mindestens ein Dichtkörper zur Anlage an das zu bearbeitende Bauteil vorgesehen ist, sodass über den Dichtkörper der Abfluss des Elektrolyten am Bauteil entlang verhindert werden kann und der Elektrolyt gezwungen wird, im Bereich der Formelektrode der Arbeitselektrode abzufließen. Darüber hinaus verhindert der Verschluss eine Bearbeitung bzw. Anätzung in unerwünschten Bereichen des zu bearbeitenden Bauteils.

Nach einem weiteren Aspekt der vorliegenden Erfindung für den selbstständig und unabhängig Schutz begehrt wird, ist die Arbeitselektrode selbst zentrierend ausgebildet, so dass beim Einführen in eine Ausnehmung eines zu bearbeitenden Bauteils automatisch eine definierte Anordnung zum zu bearbeitenden Bauteil ermöglicht wird.

Zur Ausbildung einer selbst zentrierenden Arbeitselektrode können die Arbeitselektrode bzw. der eine Formelektrode tragende Elektrodenträger einer rohrförmigen Arbeitselektrode entlang mindestens einer Achse bzw. Raumrichtung, vorzugsweise entlang mehrerer unabhängiger Raumachsen, verschiebbar gelagert sein. Dadurch ist in einfacher Weise eine geeignete Positionierung der Arbeitselektrode zum zu bearbeitenden Bauteil gegeben. Die schwimmende Lagerung kann insbesondere die Beweglichkeit quer zu einer Richtung vorsehen, entlang der die Elektrode beim Betrieb in Richtung des zu bearbeitenden Bauteils verfahren wird. Zusätzlich können Arretiermittel vorhanden sein, die eine kinematisch bestimmte Lagerung der Arbeitselektrode bzw. des Elektrodenträgers ermöglichen. Beispielsweise können dies Klemmelemente, insbesondere hydraulisch oder pneumatisch betätigbare Klemmelemente sein.

Mit einer derartigen Ausgestaltung einer Elektrodenanordnung ist es möglich die Arbeitselektrode zunächst schwimmend zu lagern und in diesem Zustand der freien Beweglichkeit in Anlage an das zu bearbeitende Bauteil zu bringen. In dieser Position zentriert sich die Arbeitselektrode bzgl. des zu bearbeitenden Bauteils selbst und kann dann in dieser Anordnung durch die Arretiermittel arretiert bzw. festgestellt werden, sodass dann keine weitere Bewegung der Arbeitselektrode bzw. des Elektrodenträgers in der Lagerung der Elektrodenanordnung möglich ist. Nach dem Feststellen der Arbeitselektrode oder des Elektrodenträgers wird die Elektrodenanordnung mit der festgestellten Arbeitselektrode in eine Ausgangsposition zur Durchführung der Bearbeitung verfahren und anschließend während der Bearbeitung nach geführt, um einen definierten Abtrag an dem zu bearbeitenden Bauteil zu erzielen.

Zum Zweck der Selbstzentrierung kann der Verschluss in axialer Verlängerung des Elektrodenträgers ein Vorsatzelement aufweisen, welches ein Zentrierhilfsmittel aufweist. Beispielsweise kann das Vorsatzelement spitz zulaufend, z. B. in Form einer Kegel(stumpf)form, ausgebildet sein, um ein einfaches Einführen und symmetrisches Ausrichten bezüglich einer Ausnehmung des zu bearbeitenden Bauteils zu gewährleisten. Beispielsweise kann die Ausnehmung durch eine Schaufelfußnut in einer Turbinen- oder Verdichterscheibe gebildet sein.

Eine Elektrodenanordnung kann auch mehrere Arbeitselektroden aufweisen, die parallel zueinander angeordnet sein können.

Eine Elektrodenanordnung kann zudem in einer Anlage zum elektrochemischen Bearbeiten mit einer entsprechenden Halterung für die Elektrodenanordnung und einer Bauteilaufnahme zur Lagerung eines zu bearbeitenden Bauteils angeordnet sein, sodass nach einem weiteren Aspekt der vorliegenden Erfindung auch eine entsprechende Anlage beansprucht wird.

Die Halterung der Elektrodenanordnung und/oder die Arbeitselektroden der Elektrodenanordnung können entlang einer Raumrichtung, vorzugsweise entlang mehrerer unabhängiger Raumrichtungen, verfahrbar und/oder um eine oder mehrere unabhängige Raumachsen drehbar sein. Bei mehreren parallel zueinander angeordneten Arbeitselektroden können diese entsprechend gleichzeitig parallel zueinander bewegt werden. Durch die Beweglichkeit der Arbeitselektroden ist eine geeignete Anordnung zu einem zu bearbeitenden Bauteil gewährleistet.

Darüber hinaus kann die Bauteilaufnahme zur Lagerung des zu bearbeitenden Bauteils ebenfalls um eine oder mehrere Achsen dreh- und/oder schwenkbar und/oder entlang einer oder mehrerer unabhängiger Raumrichtungen verschiebbar sein.

Darüber hinaus sind die Elektrodenanordnung und/oder die Anlage mit der Elektrodenanordnung so eingerichtet, dass ein definiertes Absenken der Arbeitselektrode zum Einstellen eines geeigneten Arbeitsspalts möglich ist.

Die Elektrodenanordnung bzw. die Anlage wird nämlich so betrieben, dass die Arbeitselektrode zunächst in einem ersten Abstand zum Bauteil angeordnet wird und anschließend während der Bereitstellung eines Elektrolyten unter Anlegung eines elektrischen Stromes in eine Position mit einem zweiten, verringerten Abstand zum Bauteil verfahren wird, um den gewünschten Abtrag von Material beim Bauteil und die entsprechende Formgebung zu bewirken.

Die Verfahrgeschwindigkeit der Arbeitselektrode kann hierbei im Bereich von 0,05 mm pro Minute und 3 mm pro Minute liegen.

Vor der elektrochemischen Bearbeitung muss mindestens eine Arbeitselektrode, vorzugsweise eine selbst zentrierende Arbeitselektrode gemäß der vorliegenden Erfindung in eine entsprechende Ausnehmung eines zu bearbeitenden Bauteils eingeführt werden und relativ zum zu bearbeitenden Bauteil ausgerichtet werden, wobei bei mehreren parallel angeordneten Arbeitselektroden dies gleichzeitig in einer gemeinsamen Bewegung erfolgen kann.

Der elektrochemische Abtrag kann mittels eines gepulsten elektrischen Stroms erfolgen.

Um zu vermeiden, dass ein Abtrag in unerwünschten Bereichen an dem zu bearbeitenden Bauteil erfolgt, können an dem zu bearbeitenden Bauteil elektrisch isolierende Abdeckungen angeordnet werden. Entsprechende Abdeckungen können auch an der Arbeitselektrode bzw. der Formelektrode vorgesehen werden, um eine gezielte Beeinflussung der elektrischen Potentialverteilung zu ermöglichen.

Die elektrisch isolierenden Abdeckungen am zu bearbeitenden Bauteil und/oder der Arbeitselektrode können gleichzeitig als Elektrolytleitelemente ausgebildet sein, um einen gewünschten Fluss des Elektrolyten durch den Arbeitsspalt zu erzielen.

Die zu bearbeitenden Bauteile können insbesondere aus Stahl, Nickelbasislegierungen oder Titanlegierungen gebildet sein.

### KURZBESCHREIBUNG DER FIGUREN

Die beigefügten Zeichnungen zeigen in rein schematischer Weise in
- Figur 1: einen Querschnitt durch eine erste Ausführungsform einer selbst zentrierenden Elektrode zum definierten Kanten-Verrunden mit ECM;
- Figur 2: eine Querschnittsansicht einer zweiten Ausführungsform einer selbst zentrierenden Elektrode zum definierten Kanten-Verrunden mit ECM;
- Figur 3: eine Querschnittsansicht einer dritten Ausführungsform von selbst zentrierenden Elektroden zum definierten Kanten-Verrunden mit ECM, wobei mehrere Elektroden parallel angeordnet sind;
- Figur 4: eine Querschnittsansicht einer weiteren Ausführungsform einer Formelektrode bei der Bearbeitung von Kanten am Beispiel einer Ausnehmung einer Schaufelfußnut in einer Turbinen- oder Verdichterscheibe;
- Figur 5: eine Querschnittsansicht einer weiteren Ausführungsform einer Formelektrode bei der Bearbeitung von Räumnuten in einer Turbinen- oder Verdichterscheibe;
- Figur 6: eine vergrößerte Darstellung der Elektrode aus Figur 5;
- Figur 7: eine Seitenansicht einer ersten Anlage zur Bearbeitung von Turbinenscheiben;
- Figur 8: eine Ansicht der Anlage aus Figur 4 um 90° gedreht; und in
- Figur 9: eine Seitenansicht einer zweiten Ausführungsform einer Anlage zur Bearbeitung von Bauteilen mittels ECM.

### AUSFÜHRUNGSBEISPIELE

Weitere Vorteile, Merkmale und Kennzeichen der vorliegenden Erfindung werden bei der nachfolgenden detaillierten Beschreibung von Ausführungsbeispielen anhand der beigefügten Zeichnungen deutlich. Die Erfindung ist jedoch nicht auf die Ausführungsbeispiele beschränkt.

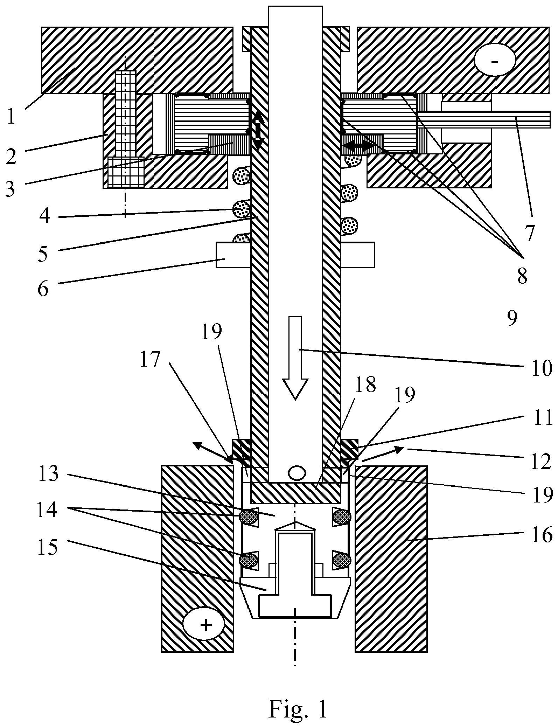

Die Figur 1 zeigt eine Querschnittsansicht durch eine selbstzentrierende Elektrode zur definierten Kanten-Verrundung mittels ECM (elektrochemisches Abtragen (electrochemical machining)).

Die Elektrode weist eine Aufnahmeplatte 1 auf, an der mittels einer Schraubverbindung ein Klemmlager 2 angeordnet ist. Das Klemmlager 2 hält eine hydraulische Klemmscheibe 3, mittels der eine rohrförmige Arbeitselektrode 5 gegenüber der Aufnahmeplatte 1 gehalten werden kann. Die hydraulische Klemmscheibe 3 ist schwimmend im Klemmlager 2 gelagert und weist eine Hydraulikzufuhr 7 auf, mittels der Hydrauliköl in die Klemmscheibe gepumpt werden kann. Die Klemmscheibe 3 weist mehrere Membranbereiche 8 auf, die anliegend an die Aufnahmeplatte 1, das Klemmlager 2 und den rohrförmigen Elektrodenträger der Arbeitselektrode 5 ausgebildet sind. Durch Aufbringen eines Hydraulikdrucks mittels des Hydrauliköls werden die Membranen 8 nach außen verformt, so dass sie mit dem entsprechenden Hydraulikdruck gegen die benachbarten Bauteile, nämlich die Aufnahmeplatte 1, das Klemmlager 2 und den Elektrodenträger der Arbeitselektrode 5 drücken. Auf diese Weise kann die Arbeitselektrode 5 bezüglich der Aufnahmeplatte 1 festgelegt werden, wobei die Aufnahmeplatte 1 ortsfest oder beweglich in einer entsprechenden Anlage (siehe unten) angeordnet ist, so dass die Lage der Arbeitselektrode definiert eingestellt werden kann.

Der rohrförmige Elektrodenträger der Arbeitselektrode 5, welcher als Träger für eine entsprechend ausgebildete Formelektrode bzw. eine Senkelektrode 11 dient, weist an seinem Ende, an dem die Senkelektrode 11 angeordnet ist, eine stirnseitige Abschlussplatte 18 auf, an deren Stirnseite ein Dicht- und Führungsstück 13 angeordnet ist, an welchem wiederum über eine Schraubverbindung ein Vorsatzelement 15 angebracht ist. Das Vorsatzelement 15 ist kegelstumpfförmig ausgebildet und vorzugsweise aus Hartmetall gebildet. Am Dicht- und Führungsstück 13, welches vorzugsweise aus Keramik oder Kunststoff gebildet sein kann, sind Nuten ausgebildet, in denen Dichtringe 14 vorgesehen sind. Das Dicht- und Führungsstück 13 sowie das Vorsatzelement 15 dienen dazu, die Arbeitselektrode 5 in einen mit der Senkelektrode 11 zu bearbeitenden Hohlraum einzuführen. Im gezeigten Ausführungsbeispiel kann dies eine Schaufelfußnut einer Turbinenscheibe 16 sein. Die Senkelektrode 11 weist eine entsprechende Negativform 17 einer Kantenabrundung auf, die an den Kanten der Schaufelfußnut in der Scheibe 16 ausgebildet werden soll. Entsprechend dient das Vorsatzelement 15 mit dem Dicht- und Führungsstück 13 zum mittigen Zentrieren der Senkelektrode in der Schaufelfußnut der Turbinenscheibe 16. Durch die Anlage der Dichtringe 14 an den Seitenrändern der Nut wird auf Grund der Beweglichkeit des Elektrodenträgers der Arbeitselektrode 5 gegenüber der Aufnahmeplatte 1 und dem Klemmlager 2 (siehe Doppelpfeile) eine Selbstzentrierung der Elektrode ermöglicht.

Hierzu wird der Elektrodenträger der Arbeitselektrode 5 im Klemmlager 2 beweglich gelagert, sodass insbesondere eine Beweglichkeit quer zur Längsachse gegeben ist. Die Arbeitselektrode wird dann in die Nut soweit eingefahren, bis sie an der zu bearbeitenden Kante anliegt und die Feder 4 um einen geringen Betrag zusammengedrückt wird. Anschließend erfolgt die hydraulische Klemmung des Elektrodenträgers und dann wird die Elektrodenanordnung mit dem festgeklemmten Elektrodenträger von dem zu bearbeitenden Bauteil entfernt, um einen Startspalt für die elektrochemische Bearbeitung zu erzeugen. Durch die Selbstzentrierung der Elektrode wird eine definierte Start- bzw. Nullposition der Arbeitselektrode eingestellt. Damit ist die Senkelektrode 11 bzw. die Formelektrode 11, die dem Negativ der fertigen Kanten entspricht durch Ausrichten oder Zentrieren längs und quer zur Vorschubachse, also der Längsachse der Elektrode, exakt über der Kante positioniert und kann anschließend mit einem Vorschub gemäß dem Doppelpfeil in die Ausnehmung der Räumnut hinein die Kante elektrochemisch bearbeiten, wobei der für die elektrochemische Bearbeitung notwendige Elektrolyt in einem Kanal zwischen Kante und Formelektrode 11 verläuft. Bei der Bearbeitung werden die exakt positionierte Arbeitselektrode bzw. Formelektrode, die durch die Klemmung in ihrer Position nicht mehr verschiebbar ist, entsprechend dem Bearbeitungsvorschritt abgesenkt, so dass sich eine gleichbleibende Bearbeitung des zu bearbeitenden Bauteils ergibt.

Der Elektrodenträger der Arbeitselektrode 5, der eine Elektrolytzuflussleitung 10 definiert, weist zwischen der Abschlussplatte 18 und der Senkelektrode 11 Austrittsöffnungen 19 auf, durch die der Elektrolyt, welcher durch den Elektrodenträger der Arbeitselektrode 5 in Richtung der Senkelektrode 11 transportiert wird, austreten kann, um den Spalt zwischen der Senkelektrode 11 und der Schaufelfußnut in der Scheibe 16 mit Elektrolyt zu füllen. Durch die Dichtringe 14 wird verhindert, dass der Elektrolyt den Spalt zwischen Arbeitselektrode und Schaufelfußnut auf andere Art und Weise verlassen kann als durch den Spalt, der durch die Senkelektrode 11 gebildet ist. Dadurch ist gewährleistet, dass der Elektrolyt, der durch den Elektrodenträger der Arbeitselektrode 5 in Richtung Senkelektrode 11 gepumpt wird, im Bereich der Senkelektrode 11 vorliegt und dort zum elektrochemischen Abtrag genutzt werden kann.

Die Arbeitselektrode 5 kann sich gemäß dem gezeigten Doppelpfeil entlang ihrer Längsachse auf und ab bewegen, um den Spalt zwischen der Senkelektrode 11 und dem zu bearbeitenden Bauteil, nämlich der Scheibe 16, zu verändern. Zur Verschiebung der Arbeitselektrode 5 entlang ihrer axialen Erstreckung kann ein entsprechender Antrieb (nicht gezeigt) vorgesehen sein, der selbstständig oder im Zusammenspiel mit der Schraubenfeder 4 die entsprechende Bewegung der Arbeitselektrode 5 und somit der Senkelektrode 11 bewirkt.

Die gezeigte selbst zentrierende Elektrode zum definierten Kanten-Verrunden mittels elektrochemischen Abtrag (ECM) wird nun in der Weise eingesetzt, dass zunächst eine zu bearbeitende Turbinenscheibe 16 gegenüber der Elektrode positioniert wird. Dann wird das Vorsatzelement 15 und nachfolgend das Dicht- und Führungsstück 13 in die Schaufelfußnut der zu bearbeitenden Turbinenscheibe 16 eingefädelt, wobei über die entsprechende Einstellung des Hydraulikdrucks an der Klemmscheibe 3 die Arbeitselektrode 5 gegenüber der Aufnahmeplatte 1 und dem Klemmlager 2 verschiebbar ist, so dass eine selbstzentrierende Einstellung der Arbeitselektrode 5 und somit der Senkelektrode 11 in der Schaufelfußnut der zu bearbeitenden Turbinenscheibe 16 möglich ist. Nach dem Einfädeln und dem Selbstzentrieren der Elektrode wird dann die Arbeitselektrode 5 über die hydraulische Klemmscheibe 3 festgeklemmt, wobei dann lediglich eine Verschiebung der Arbeitselektrode 5 entlang ihrer Längsachse mit der Aufnahmeplatte 1 möglich ist, um durch ein entsprechendes Verringern des Spalts vor der Senkelektrode 11 den elektrochemischen Abtrag an der Turbinenscheibe 16 zu bewirken, so dass der gewünschte Verrundungsradius an der Schaufelfußnut der Turbinenscheibe 16 eingestellt wird. Die Vorschubgeschwindigkeit beim Absenken kann hierbei im Bereich von 0,05 bis 3 mm pro Minute liegen.

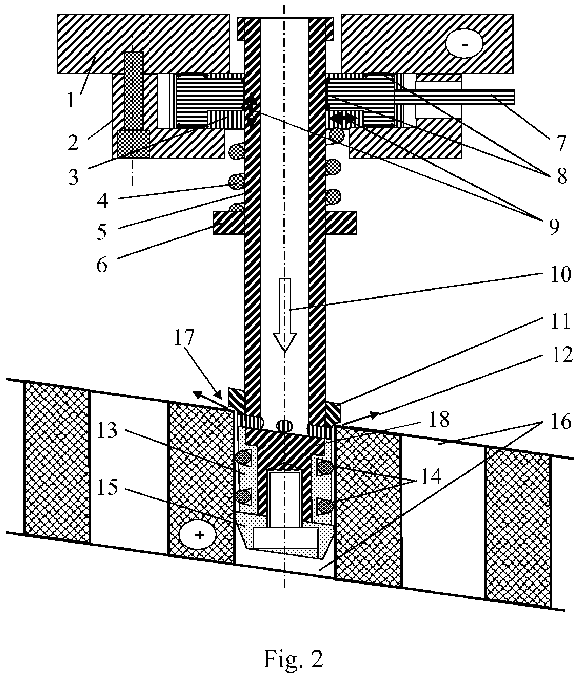

Die Fig. 2 zeigt die selbstzentrierende Elektrode aus Fig. 1 in einem anderen Anwendungsfall. Statt die Kanten einer Schaufelfußnut in einer Turbinenscheibe 16 zu verrunden, bei der die Schaufelfußnut senkrecht zur Stirnseite der Turbinenscheibe 16 ausgebildet ist, werden die Kanten von schräg verlaufenden Schaufelfußnuten definiert gerundet, wobei die Schaufelfußnuten gegenüber den Stirnseiten der Turbinenscheibe 16 in einem bestimmten Winkel angeordnet sind.

Wie der Fig. 2 zu entnehmen ist, wird für diesen Fall auch die Turbinenscheibe 16 in einem entsprechenden Winkel gegenüber der Arbeitselektrode 5 bzw. ihrer Längsachse angeordnet. Der gleiche Winkel wird dann bei der Senkelektrode 11 vorgesehen und auch das Vorsatzelement 15 sowie die Abschlussplatte 18 und das Dicht- und Führungsstück 13 weisen entsprechende schräg verlaufende Stirnseiten auf, um beim Einführen der Elektrode in die Schaufelfußnut symmetrische Verhältnisse für das Einführen und Selbstzentrieren bereitzustellen. Im Übrigen ist die selbstzentrierende Elektrode der Fig. 2 nahezu identisch mit der Ausführungsform der Fig. 1, sodass dieselben Bezugszeichen für dieselben Komponenten verwendet werden und eine zusätzliche Beschreibung der identischen Komponenten weggelassen wird. Lediglich die Anordnung des Dicht- und Führungsstücks 13 sowie der Abschlussplatte 18 der Arbeitselektrode 5 sind konstruktiv unterschiedlich gelöst. Bei der Ausführungsform der Fig. 2 ist das Dicht- und Führungsstück 13 als Hülse ausgebildet und auf einem zylinderförmigen Vorsprung der Abschlussplatte aufgesetzt.

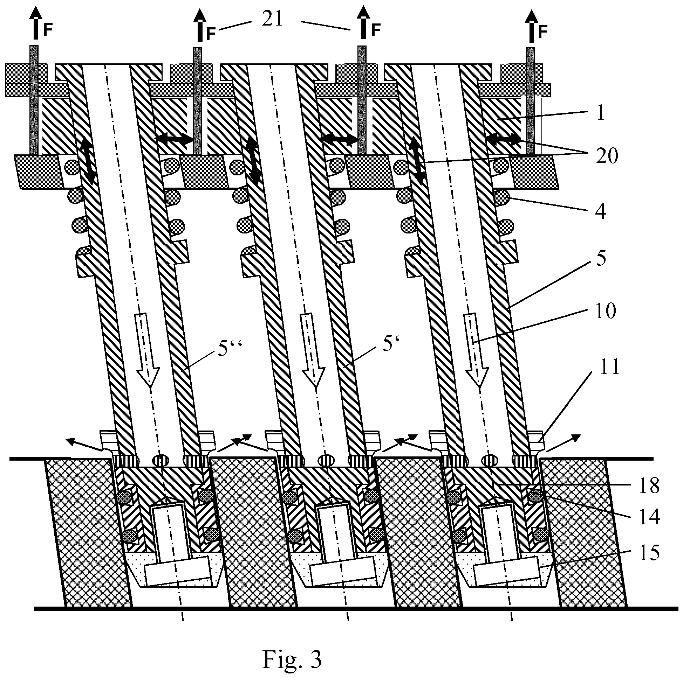

Die Fig. 3 zeigt eine weitere Ausführungsform einer Elektrodenanordnung zum definierten Kanten-Verrunden mittels elektrochemischen Abtrags (ECM). Die in der Fig. 3 gezeigte Ausführungsform unterscheidet sich von den vorangegangenen Ausführungsformen bereits darin, dass mehrere parallele Arbeitselektroden 5, 5', 5" statt nur einer einzelnen Arbeitselektrode vorgesehen sind, sodass mehrere Schaufelfußnuten einer Turbinenscheibe gleichzeitig bearbeitet werden können. Darüber hinaus ist die schwimmende Lagerung der Elektrodenträger der Arbeitselektrode 5, 5', 5" in der Aufnahmeplatte 1 nicht durch hydraulische Klemmscheiben realisiert, sondern durch mechanische Klemmanordnungen, die jedoch ebenfalls eine Verschiebung der Arbeitselektroden 5, 5', 5" quer zu ihren Längsachsen für die Selbstzentrierung ermöglichen. Die Bewegungsmöglichkeiten sind durch die Doppelpfeile 20 angezeigt, während die Pfeile 21 die Klemmkraft anzeigen. Im Übrigen ist der Aufbau der einzelnen Elektroden identisch zu den Ausführungsformen der Figuren 1 und 2, sodass wiederum gleiche Komponenten mit identischen Bezugszeichen versehen sind und hier nicht erneut beschrieben werden.

Bei dem gezeigten Ausführungsbeispiel ist das zu bearbeitende Bauteil parallel zu der Aufnahmeplatte 1 der Arbeitselektroden angeordnet, die in der selben in einem Winkel angeordnet sind. Der Winkel entspricht der Schräge der Schaufelfußnuten in dem zu bearbeitenden Bauteil. Die Arbeitselektroden werden durch gleichzeitiges Drehen und Verfahren in Längsrichtung in die Schaufelfußnuten eingefahren, wobei sich symmetrische Verhältnisse für das Einführen und Selbstzentrieren ergeben.

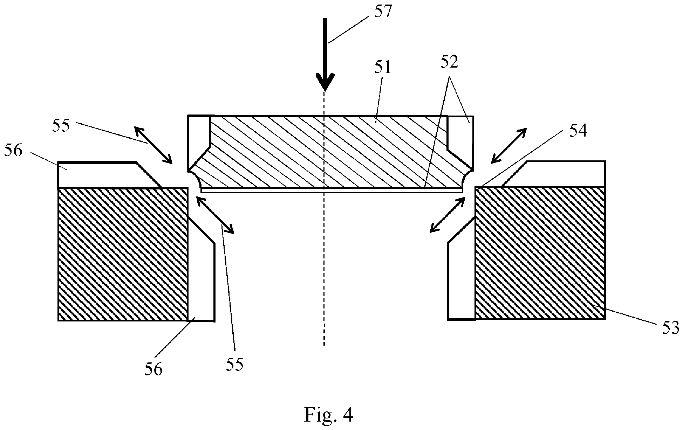

Die Fig. 4 zeigt in einer Querschnittsansicht die Anordnung einer Elektrode 51, die keinen Elektrolytzufluss durch einen rohrförmigen Körper vorsieht. Stattdessen wird hier der Elektrolyt nur in den entsprechenden Spalt zwischen Elektrode 51 und Bauteil 53 von der Seite eingebracht. Die Elektrode 51 weist Abdeckungen 52 auf, die elektrisch isolierend sind und lediglich an den Kanten die Elektrode 51 freigeben, so dass sich eine bestimmte Potentialverteilung einstellt. Ebenso ist am zu bearbeitenden Bauteil 53 eine Anordnung von elektrisch isolierenden Abdeckelementen 56 vorgesehen, die einerseits verhindern, dass unerwünschte Bereiche des Bauteils 53 abgetragen werden und andererseits zusätzlich zusammen mit den elektrisch isolierenden Abdeckungen 52 der Elektrode 51 die Fließrichtungen 55 des Elektrolyten definieren. Der Pfeil 57 zeigt wiederum die Bewegungsrichtung der Elektrode 51 während der Bearbeitung an.

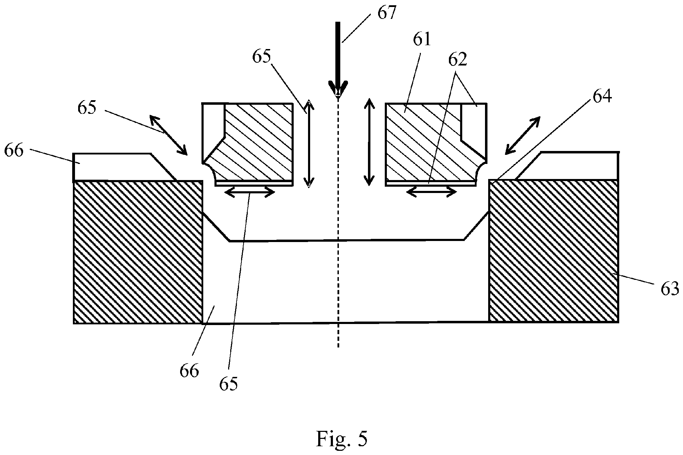

Die Fig. 5 zeigt ein weiteres Beispiel der Bearbeitung ähnlich dem Ausführungsbeispiel der Fig. 4. Allerdings wird hier wiederum eine Elektrode 61 verwendet, die einen Zufluss des Elektrolyten durch eine rohrförmige Ausbildung der Elektrode ermöglicht. Entsprechend der Ausführungsform der Fig. 4 sind sowohl an der Elektrode 61 als auch am Bauteil 63 elektrisch isolierende Abdeckelemente 62 bzw. 66 vorgesehen, die wiederum den Fluss des Elektrolyten in bestimmten Richtungen 65 mit beeinflussen und zusätzlich zum Schutz vor chemischem Abtrag dienen. Insbesondere ist die Öffnung im Bauteil 63 zwischen den zu bearbeitenden Kanten 64 durch einen Stopfen vollständig geschlossen. Der Pfeil 67 deutet wiederum die Senkbewegung der Elektrode 61 während der Bearbeitung an.

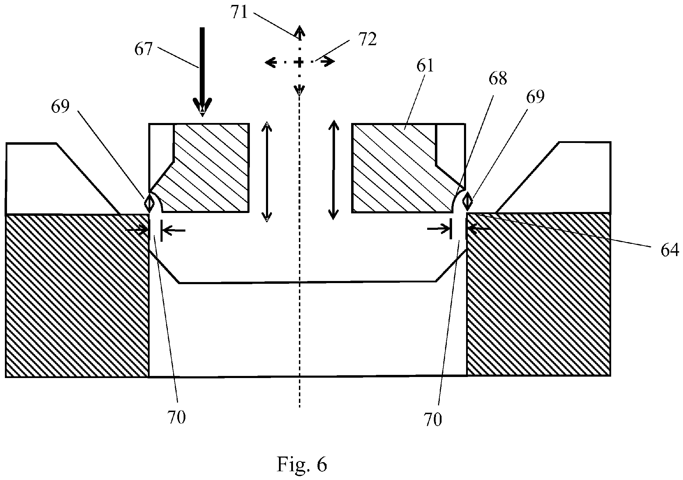

In der Fig. 6 ist die Situation aus Fig. 5 in größerem Detail dargestellt und es ist mit den Pfeilen 71 und 72 gezeigt, wie die Elektrode 61 gegenüber dem zu bearbeitenden Bauteil 63 bzw. den zu bearbeitenden Kanten 64 zentriert werden kann, wobei dann nach der Zentrierung und Feststellung der Elektrode 61 in ihrer Lagerung nur noch die für die Bearbeitung notwendige Senkbewegung gemäß dem Pfeil 67 möglich ist. Die Doppelpfeile 69 und 70 zeigen im Detail die exakte Einstellung der Abstände zwischen der Formelektrode 68 und der Kante 64, wobei die Formelektrode 68 hier eine entsprechende runde Form aufweist, die auf die Kanten 64 übertragen werden soll.

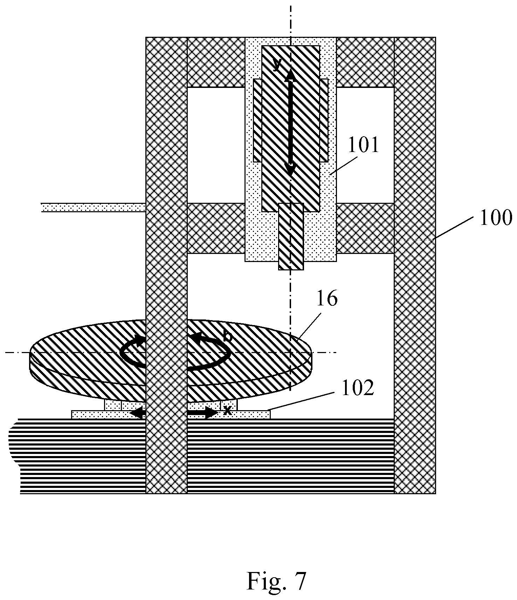

Die Fig. 7 zeigt eine Anlage zum elektrochemischen Bearbeiten von Turbinen oder Verdichterscheiben unter Einsatz von Elektroden, wie sie in den Figuren 1 bis 6 beschrieben sind.

Die Anlage umfasst ein Maschinengestell 100 und eine Elektrodenanordnung 101, wie sie beispielsweise bei den Figuren 1 bis 6 gezeigt ist. Die Elektrodenanordnung 101 bzw. die entsprechende Arbeitselektrode ist entlang einer Y-Achse verschiebbar, sodass die Arbeitselektrode in Richtung des zu bearbeitenden Werkstücks 16 abgesenkt und angehoben werden kann. Das Werkstück in Form einer Turbinenscheibe 16 ist auf einer Werkstücklagerung 102 angeordnet, die eine Drehung der Turbinenscheibe 16 um ihre Mittelachse sowie ein Verkippen der Turbinenscheibe 16 um eine Drehachse parallel zur Horizontalen ermöglicht, um einen Winkel a zur Horizontalen einstellen zu können. Auf diese Weise kann die Turbinenscheibe 16 beispielsweise schräg zur Längsachse des rohrförmigen Elektrodenträgers der Arbeitselektrode 5, wie in Fig. 2 dargestellt ist, angeordnet werden.

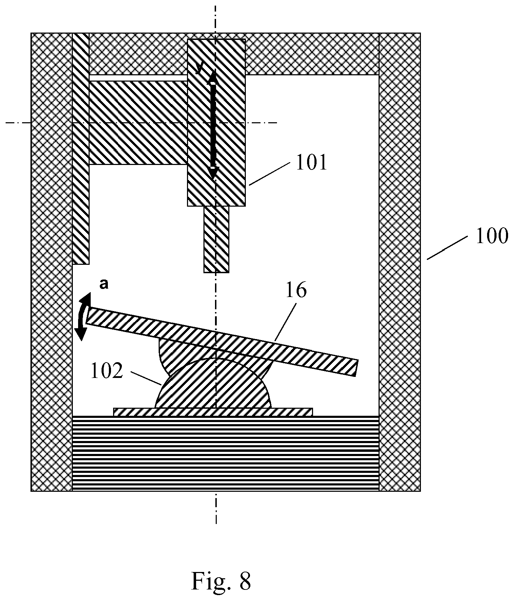

Die Fig. 8 zeigt eine weitere Ausführungsform einer Anlage zur elektrochemischen Bearbeitung von Turbinenscheiben oder anderen Bauteilen, bei welcher beispielsweise die Elektrodenanordnung 105 der Fig. 3 eingesetzt wird. Da hierbei die Arbeitselektroden schräg ausgerichtet sind, kann die Elektrodenanordnung 105 mehrachsig verfahren werden und somit nicht nur entlang einer Y-Achse auf und ab bewegt werden, sondern auch um die Y-Achse gedreht und bei Bedarf entlang X- und Z-Achsen, die quer zueinander und quer zur Y-Achse stehen, verschoben werden, um durch eine mehrachsige Bewegung ein Einführen der schrägen Arbeitselektroden der Elektrodenanordnung 105 in schräg verlaufende Schaufelfußnuten für schräg verzahnte Schaufeln zu ermöglichen. Hierzu können geeignete Halterungen 103, 104, 108 am Maschinengestell 100 angeordnet sein.

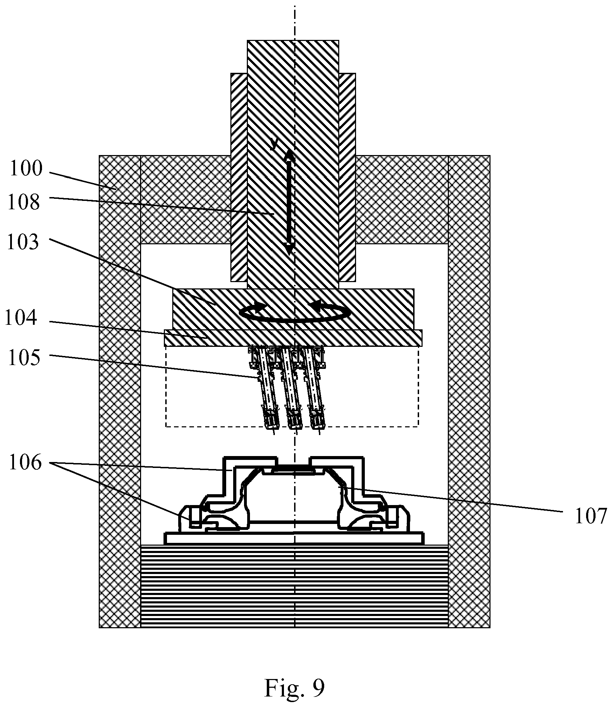

In der Fig. 9 ist zudem ein anderes Beispiel für ein zu bearbeitendes Bauteil 107 gezeigt, bei dem ferner Abdeckungen 106 zum Schutz des Bauteils vorgesehen sind.
Obwohl die vorliegende Erfindung anhand der Ausführungsbeispiele detailliert beschrieben worden ist, ist für den Fachmann selbstverständlich, dass die Erfindung nicht auf diese Ausführungsbeispiele beschränkt ist, sondern dass vielmehr Abwandlungen im Rahmen der Patentansprüche möglich sind.

## Patentansprüche

1. Elektrodenanordnung zum definierten Verrunden oder Entgraten von Kanten von elektrisch leitfähigen Bauteilen, insbesondere Turbinenteilen, mittels elektrochemischen Abtrags mit mindestens einer Arbeitselektrode (5),
die Arbeitselektrode einen rohrförmigen Elektrodenträger aufweist, durch den eine Elektrolytzuflussleitung (10) bereitgestellt wird,
wobei der Elektrodenträger am stirnseitigen Ende einen Verschluss (13, 18) aufweist, der so angeordnet ist, dass die Elektrolytzuflussleitung in axialer Richtung des Elektrodenträgers verschlossen ist, wobei in radialer Richtung mindestens eine Austrittsöffnung (19) angeordnet ist,
**dadurch gekennzeichnet, dass**
am rohrförmigen Elektrodenträger der Arbeitselektrode weiterhin eine Formelektrode (11) mit einer Negativform des zu bearbeitenden Bauteils angeordnet ist und der Verschluss (13, 18) ein Dicht - und Führungsstück (13) sowie ein in axialer Verlängerung des Verschlusses an dem Dicht- und Führungselement (13) angebrachtes Vorsatzelement (15) mit Zentrierhilfsmitteln zum Führen der Arbeitselektrode in einem zu bearbeitenden Hohlraum aufweist.

2. Elektrodenanordnung nach Anspruch 1,
**dadurch gekennzeichnet, dass**
die Formelektrode (11) mit der Negativform der Kantenform am Elektrodenträger in Verlängerung der Austrittsöffnung angeordnet ist.

3. Elektrodenanordnung nach Anspruch 1 oder 2,
**dadurch gekennzeichnet, dass**
der Verschluss (13, 18) radial zur Elektrodenträgerlängsachse seitlich mindestens einen Dichtkörper (14) zur Anlage an das zu bearbeitende Bauteil aufweist.

4. Elektrodenanordnung nach Anspruch 3,
**dadurch gekennzeichnet, dass**
der Dichtkörper (14) relativ zur Austrittsöffnung (19) und zur Formelektrode (11) so angeordnet ist, dass er bei Anlage an das zu bearbeitende Bauteil einen Abfluss des Elektrolyten zwischen Bauteil und Verschluss verhindert und den Elektrolyten zwingt an der Formelektrode vorbei zu strömen.

5. Elektrodenanordnung nach einem der vorhergehenden Ansprüche,
**dadurch gekennzeichnet, dass**
die Arbeitselektrode beim Einführen in eine Ausnehmung des zu bearbeitenden Bauteils und relativ zum zu bearbeitenden Bauteil selbstzentrierend ist, wobei insbesondere die Arbeitselektrode oder ein eine Formelektrode tragender Elektrodenträger der Arbeitselektrode schwimmend gelagert sind, insbesondere in mehreren unabhängigen Raumrichtungen, und Arretiermittel zur kinematisch bestimmten Feststellung der Arbeitselektrode oder des Elektrodenträgers vorgesehen sind.

6. Elektrodenanordnung nach Anspruch 5,
**dadurch gekennzeichnet, dass**
die Arbeitselektrode oder ein eine Formelektrode tragender Elektrodenträger der Arbeitselektrode in mehreren unabhängigen Raumrichtungen schwimmend gelagert sind.

7. Elektrodenanordnung nach einem der vorhergehenden Ansprüche,
**dadurch gekennzeichnet, dass**
der Verschluss (13, 18) ein Vorsatzelement (15) aufweist, welches in axialer Verlängerung des Elektrodenträgers angeordnet ist und Zentrierhilfsmittel aufweist
und/oder dass
die Arbeitselektrode (5) mindestens entlang einer Achse, vorzugsweise entlang mehrerer unabhängiger Raumachsen verschiebbar gelagert ist.

8. Anlage zum definierten Verrunden oder Entgraten von Kanten von elektrisch leitfähigen Bauteilen, insbesondere Turbinenteilen, mittels elektrochemischen Abtrags mit mindestens einer Elektrodenanordnung nach einem der vorhergehenden Ansprüche, welche in einer Halterung aufgenommen ist, wobei zusätzlich eine Bauteilaufnahme (102) zur Lagerung eines zu bearbeitenden Bauteils vorgesehen ist.

9. Anlage nach Anspruch 8,
**dadurch gekennzeichnet, dass**
die Arbeitselektrode(n) (5, 5', 5") mindestens entlang einer Richtung, vorzugsweise entlang mehrerer unabhängiger Raumrichtungen verfahrbar und/oder um eine oder mehrere unabhängige Raumachsen drehbar ist/sind.

10. Anlage nach Anspruch 8 oder 9,
**dadurch gekennzeichnet, dass**
die Anlage eine Bauteilaufnahme (102) aufweist, die um eine oder mehrere Achsen dreh- und/oder schwenkbar und/oder entlang einer oder mehrerer unabhängiger Raumrichtungen verschiebbar ist.

11. Verfahren zum definierten Verrunden oder Entgraten von Kanten von elektrisch leitfähigen Bauteilen, insbesondere Triebwerksteilen, mittels elektrochemischen Abtrags, wobei mindestens eine selbst zentrierende (5) Arbeitselektrode bereitgestellt wird, die selbst zentrierende Arbeitselektrode (5) in eine Ausnehmung des zu bearbeitenden Bauteils eingeführt und relativ zum zu bearbeitenden Bauteil ausgerichtet wird und unter Bereitstellung eines Elektrolyten und eines elektrischen Stromes von einem ersten Abstand zum Bauteil zu einem zweiten, kleineren Abstand zum Bauteil verfahren wird
**dadurch gekennzeichnet, dass**
das Verfahren unter Verwendung der Elektrodenanordnung nach einem der Ansprüche 1 bis 7 und/oder der Anlage nach einem der Ansprüche 8 bis 10 durchgeführt wird.

12. Verfahren nach Anspruch 11,
**dadurch gekennzeichnet, dass**
die Verfahrgeschwindigkeit der Arbeitselektrode zwischen 0,05 mm/min und 3 mm/min liegt
und/oder dass
mehrere parallel angeordnete Arbeitselektroden (5, 5', 5") gleichzeitig in Ausnehmungen des zu bearbeitenden Bauteils eingeführt werden und/oder dass
gepulster elektrischer Strom verwendet wird.

13. Verfahren nach einem der Ansprüche 11 bis 12,
**dadurch gekennzeichnet, dass**
das zu bearbeitende Bauteil und/oder die mindestens eine Arbeitselektrode mit elektrisch isolierenden Abdeckungen versehen wird, die vorzugsweise gleichzeitig als Elektrolytleitelemente dienen
und/oder dass das zu bearbeitende Bauteil mit Elektrolytleitelementen, insbesondere Verschlussstopfen für Öffnungen oder Hohlräume versehen wird, die vorzugsweise gleichzeitig elektrisch isolierend als Abdeckungen ausgebildet sind.

14. Verfahren nach einem der Ansprüche 11 bis 13,
**dadurch gekennzeichnet, dass**
die mindestens eine Arbeitselektrode schwimmend gelagert ist und in einem ersten Schritt zur Zentrierung bei freier Beweglichkeit in Anlage an das zu bearbeitende Bauteil gebracht wird, worauf in einem zweiten Schritt die Arbeitselektrode festgestellt wird und anschließend auf die Position mit dem ersten Abstand gebracht wird.

## Claims

1. An electrode arrangement for the defined rounding or deburring of edges of electrically conductive components, in particular, turbine parts, by means of electrochemical machining with at least one working electrode (5),
said working electrode comprises a tubular electrode carrier, through which an electrolyte inflow line (10) is provided,
wherein the electrode carrier has, on a front end thereof, a closure (13, 18) that is arranged such that the electrolyte inflow line is closed in an axial direction of the electrode carrier, wherein at least one outlet opening (19) is arranged in a radial direction,
**characterized in that**
the tubular electrode carrier of the working electrode having also arranged thereon a shaped electrode (11) having a negative shape of the component to be machined, and the closure (13, 18) has a sealing and guiding piece (13) and an attachment element (15) that is attached in the axial extension of the closure to the sealing and guiding element (13) and that comprises a centering aid for guiding the working electrode into a cavity to be machined.

2. The electrode arrangement according to claim 1,
**characterized in that**
the shaped electrode (11) having the negative shape of the edge shape is arranged on the electrode carrier in the extension of the outlet opening.

3. The electrode arrangement according to claim 1 or 2,
**characterized in that**
the closure (13, 18) has, radially with respect to the longitudinal axis of the electrode carrier, laterally at least one sealing body (14) to bear against the component to be machined.

4. The electrode arrangement according to claim 3,
**characterized in that**
the sealing body (14) is arranged in relation to the outlet opening (19) and the shaped electrode (11) so as to prevent, when bearing against the component to be machined, an outflow of the electrolyte between the component and the closure and to force the electrolyte to flow past the shaped electrode.

5. The electrode arrangement according to any of the preceding claims,
**characterized in that**
the working electrode is self-centering on insertion into a recess of the component to be machined and relative to the component to be machined, wherein, in particular, the working electrode or an electrode carrier of the working electrode that carries a shaped electrode is mounted in a floating manner, in particular, in a plurality of independent spatial directions, and arresting elements are provided for a kinematically determinate fixing of the working electrode or the electrode carrier.

6. The electrode arrangement according to claim 5,
**characterized in that**
the working electrode or an electrode carrier of the working electrode that carries a shaped electrode is mounted in a floating manner in a plurality of independent spatial directions.

7. The electrode arrangement according to any of the preceding claims,
**characterized in that**
the closure (13, 18) comprises an attachment element (15) which is arranged in axial extension of the electrode carrier and comprises a centering aid
and/or
the working electrode (5) is mounted so as to be displaceable at least along one axis, preferably along a plurality of independent spatial axes.

8. An installation for the defined rounding or deburring of edges of electrically conductive components, in particular, turbine parts, by means of electrochemical machining, comprising at least one electrode arrangement according to any of the preceding claims, which arrangement is held in a holder, wherein a component mount (102) for mounting a component to be machined is also provided.

9. The installation according to claim 8,
**characterized in that**
the working electrode(s) (5, 5', 5") can be displaced at least along one direction, preferably along a plurality of independent spatial directions, and/or can be rotated about one or more independent spatial axes.

10. The installation according to claim 8 or 9,
**characterized in that**
the installation comprises a component mount (102) that can be rotated and/or pivoted about one or more axes and/or can be displaced along one or more independent spatial directions.

11. A method for the defined rounding or deburring of edges of electrically conductive components, in particular, engine parts, by means of electrochemical machining, wherein at least one self-centering working electrode (5) is provided, the self-centering working electrode (5) is inserted into a recess of the component to be machined and oriented relative to the component to be machined, and -while an electrolyte and an electric current are being provided-is moved from a first distance from the component to a second, smaller distance from the component
**characterized in that**
the method is carried out with the use of the electrode arrangement according to any of claims 1 to 7 and/or the installation according to any of claims 8 to 10.

12. The method according to claim 11,
**characterized in that**
the speed of travel of the working electrode is between 0.05 and 3 mm/min, and/or
a plurality of working electrodes (5, 5', 5") arranged in parallel are introduced simultaneously into recesses in the component to be machined,
and/or
a pulsed electric current is used.

13. The method according to claim 11 or 12,
**characterized in that**
the component to be machined and/or the at least one working electrode is provided with electrically insulating coverings, which preferably serve at the same time as electrolyte guiding elements, and/or the component to be machined is provided with electrolyte guiding elements, in particular, closure plugs for openings or cavities, which preferably are also configured as electrically insulating coverings.

14. The method according to any of claims 11 to 13,
**characterized in that**
the at least one working electrode is mounted in a floating manner, and is brought in a first step for centering with free mobility to bear against the component to be machined, whereupon, in a second step, the working electrode is fastened and is subsequently brought to the position at the first distance.

## Revendications

1. Agencement d'électrodes destiné à l'arrondissage ou l'ébavurage défini de bords de composants électriquement conducteurs, en particulier de pièces de turbines, par enlèvement électrochimique au moyen d'au moins une électrode de travail (5),
l'électrode de travail comprenant un support d'électrode tubulaire constituant un conduit d'alimentation en électrolyte (10),
le support d'électrode comportant à l'extrémité avant un élément de fermeture (13, 18) disposé de façon à fermer le conduit d'alimentation en électrolyte dans la direction axiale du support électrodes, au moins une ouverture de sortie (19) étant disposée dans une direction radiale, **caractérisé en ce que**
une électrode de formage (11), ayant la forme négative du composant à usiner, est en outre disposée sur le support d'électrode tubulaire de l'électrode de travail et l'élément de fermeture (13, 18) comporte une pièce d'étanchéité et de guidage (13) ainsi qu'un élément adaptateur (15) monté sur la pièce d'étanchéité et de guidage (13) dans le prolongement axial de l'élément de fermeture et pourvu de moyens de centrage auxiliaires destinés à guider l'électrode de travail dans une cavité à usiner.

2. Agencement d'électrodes selon la revendication 1,
**caractérisé en ce que**
l'électrode de formage (11), ayant la forme négative de la forme de bord, est disposée sur le support d'électrode dans le prolongement de l'ouverture de sortie.

3. Agencement d'électrodes selon la revendication 1 ou 2, **caractérisé en ce que** l'élément de fermeture (13, 18) comporte sur le côté, radialement par rapport à l'axe longitudinal du support d'électrode, au moins un élément d'étanchéité (14) destiné à venir en appui sur le composant à usiner.

4. Agencement d'électrodes selon la revendication 3,
**caractérisé en ce que**
l'élément d'étanchéité (14) est disposé par rapport à l'ouverture de sortie (19) et à l'électrode de formage (11) de façon à, lorsqu'il est en appui sur le composant à usiner, empêcher l'électrolyte de s'écouler entre le composant et l'élément de fermeture et forcer l'électrolyte à s'écouler devant l'électrode de formage.

5. Agencement d'électrodes selon l'une des revendications précédentes,
**caractérisé en ce que**
l'électrode de travail est apte à s'auto-centrer lorsqu'elle est insérée dans un évidement du composant à usiner et par rapport au composant à usiner, l'électrode de travail ou un support d'électrode, portant l'électrode de formage, de l'électrode de travail étant en particulier logé de manière flottante, en particulier dans plusieurs directions spatiales indépendantes, et des moyens d'arrêt étant prévus pour immobiliser l'électrode de travail ou le support d'électrode de manière cinématiquement définie.

6. Agencement d'électrodes selon la revendication 5,
**caractérisé en ce que**
l'électrode de travail ou un support d'électrode, portant une électrode de formage, de l'électrode de travail est logé de manière flottante dans une pluralité de directions spatiales indépendantes.

7. Agencement d'électrodes selon l'une des revendications précédentes,
**caractérisé en ce que**
l'élément de fermeture (13, 18) comporte un élément adaptateur (15) qui est disposé dans le prolongement axial du support d'électrode et qui comporte des moyens de centrage auxiliaires et/ou **en ce que**
l'électrode de travail (5) est logée de manière coulissante au moins le long d'un axe, de préférence le long de plusieurs axes indépendants de l'espace.

8. Système d'arrondissage ou d'ébavurage défini de bords de composants électriquement conducteurs, en particulier de pièces de turbines, par enlèvement électrochimique au moyen d'au moins un agencement d'électrodes selon l'une des revendications précédentes, qui est logé dans un support, un réceptacle de composant (102) étant en outre prévu pour loger un composant à usiner.

9. Système selon la revendication 8,
**caractérisé en ce que**
l'électrode ou les électrodes de travail (5, 5', 5") sont mobiles le long d'au moins une direction, de préférence le long de plusieurs directions spatiales indépendantes, et/ou peuvent tourner sur un ou plusieurs axes indépendants de l'espace.

10. Système selon la revendication 8 ou 9,
**caractérisé en ce que**
le système comporte un réceptacle de composant (102) qui est apte à tourner ou pivoter sur un ou plusieurs axes et/ou coulisser le long d'une ou de plusieurs directions spatiales indépendantes.

11. Procédé d'arrondissage ou d'ébavurage défini de bords de composants électriquement conducteurs, en particulier de pièces de turbines, par enlèvement électrochimique, au moins une électrode de travail à auto-centrage (5) étant prévue, l'électrode de travail à auto-centrage (5) étant insérée dans un évidement du composant à usiner et orientée par rapport au composant à usiner et étant déplacée d'une première distance au composant à une seconde distance au composant plus petite pendant l'alimentation en électrolyte et en courant électrique,
**caractérisé en ce que**
le procédé est mis en oeuvre à l'aide de l'agencement d'électrodes selon l'une des revendications 1 à 7 et/ou du système selon l'une des revendications 8 à 10.

12. Procédé selon la revendication 11,
**caractérisé en ce que**
la vitesse de déplacement de l'électrode de travail est comprise entre 0,05 mm/min et 3 mm/min et/ou **en ce que**
plusieurs électrodes de travail parallèles (5, 5', 5") sont insérées en même temps dans des évidements du composant à usiner
et/ou **en ce que**
l'on utilise un courant électrique pulsé.

13. Procédé selon l'une des revendications 11 à 12,
**caractérisé en ce que**
le composant à usiner et/ou l'au moins une électrode de travail est pourvu d'éléments de recouvrement électriquement isolants qui servent de préférence en même temps d'éléments de guidage d'électrolyte
et/ou **en ce que** le composant à usiner est pourvu d'éléments de guidage d'électrolyte, en particulier de bouchons de fermeture destinés à des ouvertures ou des cavités qui sont conçus pour être de préférence en même temps électriquement isolants sous la forme d'éléments de recouvrement.

14. Procédé selon l'une des revendications 11 à 13,
**caractérisé en ce que**
l'au moins une électrode de travail est logée de manière flottante et est amenée, dans une première étape de centrage, en mouvement libre en appui sur le composant à usiner de façon à, dans une seconde étape, immobiliser l'électrode de travail puis l'amener à la position à la première distance.
